# EUROPEAN PATENT APPLICATION

(11) **EP 4 471 970 A1**
(43) Date of publication of application: **04.12.2024**
(21) Application number: 22924323.3
(22) Date of filing: 02.11.2022
(51) Int. Cl.: H01M 50/531, H01M 50/533, H01M 50/586, H01M 50/15

(54) **SECONDARY BATTERY**

(30) Priority: 27.01.2022 KR 20220012598
(71) Applicant: Samsung SDI Co., Ltd., Yongin-si, Gyeonggi-do 17084 (KR)
(72) Inventor: LEE, Hyun Soo, Yongin-si, Gyeonggi-do 17084 (KR); YONG, Jun Sun, Yongin-si, Gyeonggi-do 17084 (KR)
(74) Representative: Gulde & Partner
(86) International application number: PCT/KR2022/017044
(87) International publication number: WO 2023/146069

(57) **Abstract**

An embodiment of the present invention relates to a secondary battery that can reduce heat generated by a current collector. According to an embodiment of the present invention, material having low resistance is added to the current collection area where heat generation is the greatest to lower the resistance, thereby allowing generation of heat to be reduced.

## Description

### TECHNICAL FIELD

An embodiment of the present invention relates to a secondary battery.

### BACKGROUND ART

Unlike primary batteries which are not rechargeable, secondary batteries can be charged and discharged. Low-capacity secondary batteries packaged in form of a pack including a single battery cell are widely employed in portable small-sized electronic devices such as cellular phones or camcorders. In addition, large-capacity secondary batteries packaged in forms of battery packs including tens of battery cells connected to one another are widely used for driving motors of hybrid vehicles or electric vehicles.

A secondary battery may be constructed by incorporating a stacked or wound electrode assembly and an electrolyte in a case with a separator interposed between a positive electrode plate and a negative electrode plate, and installing a cap plate in the case. In the electrode assembly, an uncoated portion tab may protrude in a lateral or upward direction, and a current collecting structure may be connected to the uncoated portion tab. Some sections of a welded portion of the current collecting structure are sections where heat is generated, and, in order to solve this, the material of the corresponding portion is designed to be thick. This leads to a decrease in the capacity of the electrode assembly, and it is necessary to develop a structure to secure cell competitiveness.

The above information disclosed in this Background section is only for enhancement of understanding of the background of the invention and therefore it may contain information that does not constitute prior art.

### DESCRIPTION OF EMBODIMENTS

### TECHNICAL PROBLEM

An embodiment of the present invention provides a secondary battery that can reduce heat generated by a current collector.

### SOLUTION TO PROBLEM

A secondary battery according to an embodiment of the present invention may include: a case that has one side open to form an opening; an electrode assembly that includes a first electrode plate accommodated in the case and having a first electrode substrate tab disposed on one side of the case in the longitudinal direction, a second electrode plate having a second electrode substrate tab disposed on the other side in the longitudinal direction of the case, and a separator interposed between the first electrode plate and the second electrode plate, and is wound or stacked; and a cap assembly including a cap plate coupled to the opening of the case, a first current collecting part and a second current collecting part respectively including a first current collector and a second current collector disposed in parallel with the upper end of the lengthwise direction of the electrode assembly and respectively electrically connected to the first electrode substrate tab and the second electrode substrate tab, a first terminal part and a second terminal part respectively electrically connected to the first current collecting part and the second current collecting part, and a plurality of insulation members coupled to at least one of the cap plate, the first current collector and the second current collector, and the first terminal part and the second terminal part, wherein the first current collecting part further comprises a sub-plate that electrically connects the first current collector and the first substrate tab, the second current collecting part further comprises a sub-plate that electrically connects the second current collector and the second substrate tab, and at least one of the sub-plates of the first current collecting part and the second current collecting part is partially or wholly made of a material having lower resistance than the first current collector or the second current collector.

The first current collecting part may further include a connection plate electrically connected to the first current collector and having one end bent in a direction of the first substrate tab, and the sub-plate may be electrically connected to the connection plate and the first substrate tab, and the second current collecting part may further include a connection plate electrically connected to the second current collector and having one end bent in a direction of the second substrate tab, and the sub-plate may be electrically connected to the connection plate and the second substrate tab.

The sub-plate of the first current collecting part may include a first connection part electrically connected to the connection plate and a second connection part electrically connected to the first substrate tab, and the sub-plate of the second current collecting part may include a first connection part electrically connected to the connection plate and a second connection part electrically connected to the second substrate tab.

One end of the connection plate and the first connection part of the sub-plate may be welded to each other, the second connection part and the first substrate tab of the first current collecting part may be welded to each other, and the second connection part and the second substrate tab of the second current collecting part may be welded to each other.

A heat generation preventing part may be provided between a welding spot of the first connection part and a first welding spot of the second connection part adjacent to the first connection part.

The heat generation preventing part may be plated with a material having lower resistance than the first current collector or the second current collector or may be a clad metal.

A welded portion of the connection plate and the sub-plate may be disposed closer to the bottom surface of the case than to the top of the electrode assembly.

In the sub-plate, the second connection part may be bent toward the electrode assembly from the first connection part, and the bent portion may be disposed closer to the bottom surface of the case than the upper end of the electrode assembly.

In the second connection part, a plate surface facing the electrode assembly may be disposed on the same plane as a plate surface of the connection plate facing the electrode assembly.

In the second connection part, a plate surface facing the electrode assembly may be disposed closer to the electrode assembly than a plate surface of the connection plate facing the electrode assembly.

The second connection part may have a welding groove concavely formed on the plate surface facing the case.

A thickness of the first current collector or the second current collector may be greater than that of the connection plate and the sub-plate.

The thickness of the first current collector or the second current collector may be 4 to 5 times the thickness of the connection plate and the sub-plate.

In addition, in an embodiment of the present invention is provided a secondary battery comprising: an electrode assembly; a case accommodating the electrode assembly; and a cap assembly coupled to the case and including a first current collector and a second current collector electrically connected to the electrode assembly and disposed parallel to the upper end of the electrode assembly, wherein the cap assembly further comprises a pair of sub-plates electrically connecting the first current collector and the second current collector to the electrode assembly, respectively, and at least one of the sub-plates is made of a material having lower resistance than the first current collector or the second current collector.

The cap assembly may include: a cap plate coupled to the case; a first current collecting part having the sub-plate electrically connected to a first substrate tab provided on the first electrode plate of the electrode assembly, and a connection plate electrically connected to the first current collector and the sub-plate; a second current collecting part having the sub-plate electrically connected to a second substrate tab provided on the second electrode plate of the electrode assembly, and a connection plate electrically connected to the second current collector and the sub-plate; a first terminal part having a first terminal pin coupled to and electrically connected to the first current collector and a first terminal plate coupled to and electrically connected to the first terminal pin; a second terminal part having a second terminal pin coupled to and electrically connected to the second current collector, a second terminal plate coupled to and electrically connected to the second terminal pin, and a conductive plate; and an insulation member made of an insulating material provided between the cap plate and the first current collector, between the first current collector and the electrode assembly, between the second current collector and the electrode assembly, between the first terminal pin and the second terminal pin and the cap plate.

The connection plate may have one end disposed parallel to the first current collector or the second current collector and the other end bent toward the electrode assembly, and the sub-plate may be welded to the bent end.

The sub-plate may include a first connection part welded to the connection plate, and a second connection part bent toward the electrode assembly from the first connection part and electrically connected to the electrode assembly.

A heat generation preventing part may be provided between a welding spot of the first connection part and a first welding spot of the second connection part adjacent to the first connection part.

The heat generation preventing part may be plated with a material having lower resistance than the first current collector or the second current collector or may be a clad metal.

### ADVANTAGEOUS EFFECTS OF INVENTION

According to an embodiment of the present invention, a material having low resistance is added to the current collection area where heat generation is the greatest to lower the resistance, thereby allowing generation of heat to be reduced.

### BRIEF DESCRIPTION OF DRAWINGS

FIG. 1 is a perspective view illustrating a secondary battery according to an embodiment of the present invention.
FIG. 2 is an exploded perspective view illustrating a cap assembly of the secondary battery according to FIG. 1.
FIG. 3 is a cross-sectional view of the secondary battery according to FIG. 1.
FIG. 4 is an enlarged cross-sectional view illustrating major parts of FIG. 3.

### BEST MODE

Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this invention will be thorough and complete and will convey the aspects and features of the present invention to those skilled in the art.

In addition, in the accompanying drawings, sizes or thicknesses of various components are exaggerated for brevity and clarity, and like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

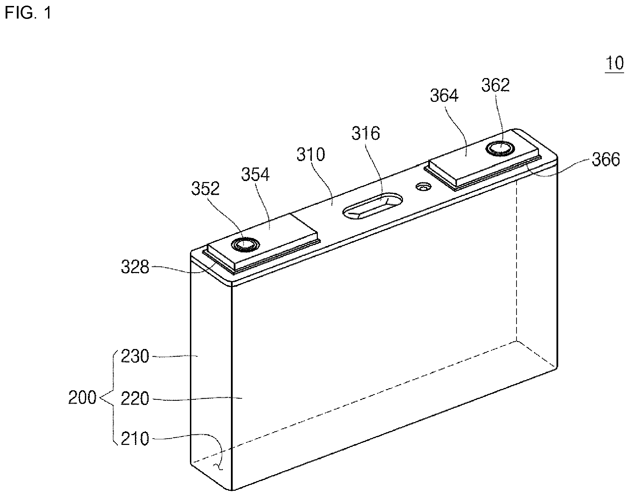

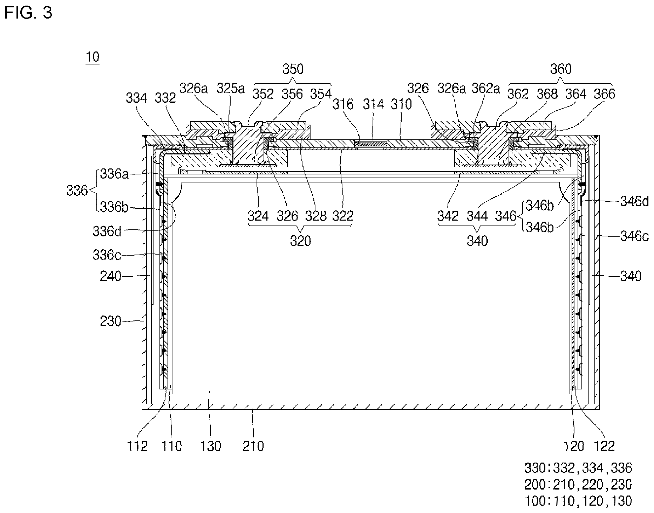

Hereinafter, a secondary battery according to an embodiment of the present invention will be described in detail with reference to the accompanying drawings (for convenience, on the basis of FIGS. 1 and 3, the following description will be given by defining the upper part as the upper direction and the lower part as the lower direction).

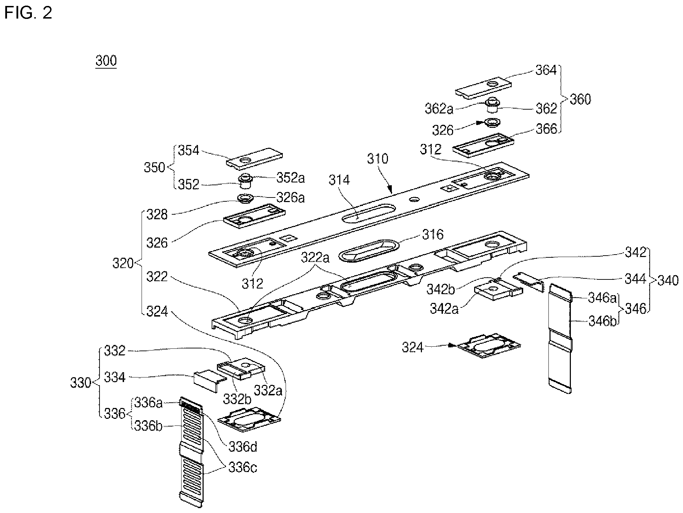

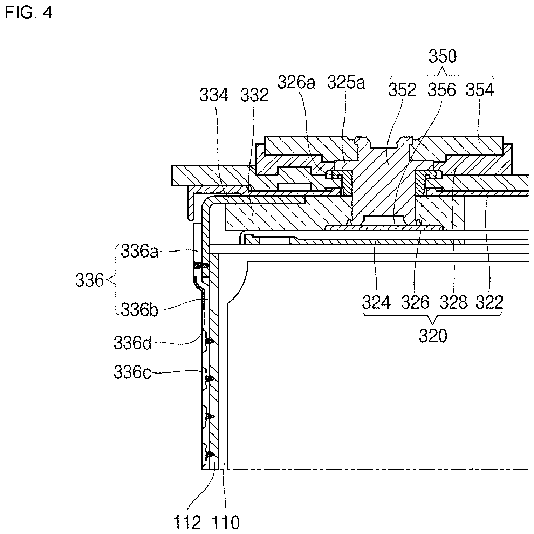

FIG. 1 is a perspective view illustrating a secondary battery according to an embodiment of the present invention. FIG. 2 is an exploded perspective view illustrating a cap assembly of the secondary battery according to FIG. 1. FIG. 3 is a cross-sectional view of the secondary battery according to FIG. 1. FIG. 4 is an enlarged cross-sectional view illustrating major parts of FIG. 3.

As shown in FIGS. 1 and 2, the secondary battery 10 according to an embodiment of the present invention may include an electrode assembly 100, a case 200 accommodating the electrode assembly 100, and a cap assembly 300 coupled to the case 200.

As shown in FIG. 2, the electrode assembly 100 may be provided by winding a unit stack composed of a first electrode plate 110 and a second electrode plate 120 in the form of a thin plate or film, and a separator 130 interposed therebetween, or stacking a plurality of stack units. When the electrode assembly 100 is formed by winding, the winding shaft may be disposed in a horizontal direction substantially parallel to the longitudinal direction of the cap assembly 300 or in a vertical direction substantially perpendicular to the longitudinal direction of the cap assembly 300. When the electrode assembly 100 is formed by stacking, the long sides of the plurality of unit stacks may be disposed adjacent to each other.

As an example, the first electrode plate 110 may serve as a negative electrode, and the second electrode plate may serve as a positive electrode, or vice versa.

When the first electrode plate 110 is a negative electrode plate, the first electrode plate 110 may be formed by applying a first electrode active material, such as graphite or carbon, to a first electrode current collector provided with a metal foil, such as copper, a copper alloy, nickel, or a nickel alloy. A first substrate tab (or a first uncoated portion), which is an area to which the first electrode active material is not applied, may be formed on the first electrode plate 110. After a plurality of first substrate tabs 112 are gathered and tack-welded, the tack-welded first substrate tabs 112 and the cap assembly 300 may be electrically connected. That is, the first substrate tab 112 may serve as a passage for current flow between the first electrode plate 110 and the first terminal part 350 of the cap assembly 300.

When the second electrode plate 120 is a positive electrode plate, the second electrode plate 120 may be formed by applying a second electrode active material, such as a transition metal oxide, to a second electrode current collector provided with a metal foil, such as aluminum or an aluminum alloy. A second substrate tab (or a second uncoated portion), which is an area to which the second electrode active material is not applied, may be formed on the second electrode plate 120. After a plurality of second substrate tabs 122 are gathered and tack-welded, the tack-welded second substrate tabs 122 and the cap assembly 300 may be electrically connected. That is, the second substrate tab 122 may be a passage for current flow between the second electrode plate 120 and the second terminal part 360 of the cap assembly 300.

In some examples, the first substrate tab 112 and the second substrate tab 122 may be formed by cutting one side of each of the first electrode plate 110 and the second electrode plate 120, respectively, when manufacturing the first electrode plate 110 and the second electrode plate 120. That is, the first substrate tab 112 may be integrally formed with the first electrode plate 110, and the second substrate tab 122 may be integrally formed with the second electrode plate 120. The first substrate tab 112 may be disposed in one direction of the electrode assembly 100, and the second substrate tab 122 may be disposed in the other direction of the electrode assembly 100. For example, as shown in FIG. 2, the first substrate tab 112 may be disposed toward the left short side of the case 200, and the second substrate tab 122 may be disposed toward the right short side of the case 200.

The separator 130 is disposed between the first electrode plate 110 and the second electrode plate 120 to prevent a short circuit and enable the movement of lithium ions. As an example, the separator 130 may include polyethylene, polypropylene, or a composite film of polyethylene and polypropylene. In some examples, the separator 130 may be replaced with an inorganic solid electrolyte such as a sulfide, oxide, or phosphate compound that does not require a liquid or gel electrolyte.

The electrode assembly 100 may be accommodated in the case 200 together with an electrolyte. In some examples, the electrolyte may include a lithium salt such as LiPF6 or LiBF4 in an organic solvent such as ethylene carbonate (EC), propylene carbonate (PC), diethyl carbonate (DEC), ethylmethyl carbonate (EMC), or dimethyl carbonate (DMC). In addition, the electrolyte may be in a liquid or gel state. In some examples, when an inorganic-based solid electrolyte is used, the electrolyte may be omitted.

As shown in FIGS. 1 and 3, the case 200 may have a substantially rectangular parallelepiped box shape, and may have an open upper portion in a longitudinal direction and an accommodation space formed therein. The electrode assembly 100 and the electrolyte may be accommodated in the case 200 through the open upper portion. Some components of the cap assembly 300 may be exposed to the outside of the case 200, and some components may be accommodated inside the case 200. The case 200 may have a rectangular bottom surface 210 and four side surfaces connected to the bottom surface 210. Among the side surfaces, sides having a relatively large area are defined as long side portions 220, and sides having a relatively small area are defined as short side portions 230. As an example, the electrode assembly 100 may be disposed so that a plate surface faces the long side portions 220. In a state in which the electrode assembly 100 is accommodated in the case 200, the cap assembly 300 is coupled to the case 200 and electrically connected to the electrode assembly 100. In this case, an insulating film 240 for insulation from the current collector may be coupled or attached to the short side portions 230 of the case 200.

As shown in FIGS. 1 to 4, the cap assembly 300 may include a cap plate 310 coupled to the case 200, a plurality of insulation members, a first current collecting part 330 and a second current collecting part 340, and a first terminal part 350 and a second terminal part 360.

As shown in FIG. 2, the cap plate 310 has a substantially rectangular plate shape. The cap plate 310 may be formed of the same material as the case 200. As an example, the cap plate 310 may have a size corresponding to an inner size of the opening of the case 200. In addition, as an example, the cap plate 310 may be coupled to the case 200 by laser welding, etc. In the cap plate 310, terminal holes 312 for being coupled with the first terminal part 350 and the second terminal part 360, grooves, injection holes, a vent hole 314 for being coupled with a vent 316, etc. may be formed. When the internal pressure of the secondary battery 10 rises, the vent 316 is broken to function to discharge gas, and a general vent structure can be applied thereto.

The insulation members include an insulation plate 322, a pair of lower insulation parts 324, a pair of pin insulation parts 326, and an upper insulation part 328. The insulation members are all made of an insulating material and can be manufactured by, for example, an injection method.

The insulation plate 322 has a substantially rectangular plate shape. The insulation plate 322 is in close contact with the lower surface of the cap plate 310 to insulate the cap plate 310 and the electrode assembly 100 from each other. In addition, the insulation plate 322 serves to insulate a current collecting structure to be described later and the cap plate 310 from each other. Therefore, the insulation plate 322 may have a side surface extending downward along an edge. The side surface may be shaped to connect the entire edge of the insulation plate 322 or may be formed only in part. The shape of the plate surface or side surface of the insulation plate 322 may vary according to the shape of a component requiring insulation. Through-holes 322a located to correspond to the terminal holes 312 and the vent holes 314 of the cap plate 310 may be formed in the insulation plate 322 . A part of the current collector and the lower insulation parts 324 may be disposed under the insulation plate 322.

The lower insulation parts 324 are provided for insulating some components of the current collector and have a substantially rectangular plate shape. The lower insulation parts 324 may be provided as a pair and disposed on the first terminal part 350 and the second terminal part 360, respectively. In addition, the lower insulation parts 324 are disposed under the current collectors 332 and 342 to be described later, and may be sized to cover the current collectors 332 and 342. The lower insulation parts 324 may be combined with the insulation plate 322 in a state in which the current collectors 332 and 342 are assembled.

The pin insulation parts 326 are provided for insulating the terminal pins 352 and 362 of the first terminal part 350 and the second terminal part 360 from the cap plate 310, which will be described later, and have a substantially cylindrical shape. The upper insulation part 328 includes a flange 326a extending outward from an upper end of the outer circumferential surface. The flange 326a is in contact with a lower portion of one side of each of the terminal pins 352 and 362, and the lower end of the upper insulation part 328 is inserted into the through hole 322a of the insulation plate 322.

The upper insulation part 328 is a component applied only to the first terminal part 350 and is disposed between the first terminal plate 354 and the cap plate 310, which will be described later. The upper insulation part 328 may have a rectangular plate shape substantially corresponding to the shape of the first terminal plate 354. The upper insulation part 328 is formed to be larger than the first terminal plate 354 and has a groove in which the first terminal plate 354 is seated. On the upper insulation part 328, a hole is formed through at a position corresponding to the terminal hole 312 of the cap plate 310. The flange 352a of the first terminal pin 352 is disposed in the formed-through hole.

As shown in FIGS. 2 to 4, the first current collecting part 330 serves to electrically connect the first electrode plate 110, which is a negative electrode plate, and the first terminal part 350. The first current collecting part 330 may include a first current collector 332 electrically connected to the first terminal part 350, a connection plate 334 electrically connected to the first current collector 332, and a sub-plate 336 electrically connected to the connection plate 334 and the first substrate tab 112.

The first current collector 332 may be made of a conductive material having a preset thickness and may have a substantially plate shape. In addition, the first current collector 332 has a plate shape without a bent or bent portion. On the first current collector 332, through-holes 322a are formed through at positions corresponding to the terminal hole 312 of the cap plate 310 and the through-hole 322a of the insulation plate 322. First terminal pins 352 to be described later are inserted into the through-holes 322a. A portion of the upper surface of the first current collector 332 is in contact with the lower surface of the insulation plate 322, and the lower surface is insulated from the electrode assembly 100 by the lower insulation parts 324. The connection plate 334 is in contact with one side of the upper surface of the first current collector 332. To this end, a seating groove 332b may be concavely formed on one side of the upper surface of the first current collector 332. Since the seating groove 332b is formed to a depth corresponding to the thickness of the connection plate 334, the upper surface of the connection plate 334 and the upper surface of the first current collector 332 may be disposed on the same plane. As an example, the vertical thickness of the first current collector 332 may be 4-5 times the thickness of the connection plate 334 and the sub-plate 336.

The connection plate 334 is made of a conductive material having a relatively smaller thickness than the first current collector 332, and may have a shape obtained by bending a plate shape substantially in a vertical direction. On the basis of the bent portion of the connection plate 334, the upper side is defined as an upper portion, and the downwardly extending portion is defined as a lower portion. The lower surface of the upper portion of the connection plate 334 is seated in the seating groove 332b formed on the upper surface of the first current collector 332, and the upper surface of the upper portion is in close contact with the lower surface of the insulation plate 322. The outer surface of the lower portion of the connection plate 334 is in contact with one side of the sub-plate 336. When the first current collector 332 is fixed in a state in which the connection plate 334 is seated on the first current collector 332, the connection plate 334 may also be fixed between the insulation plate 322 and the first current collector 332. Accordingly, the connection plate 334 may be physically and electrically connected to the first current collector 332 without separate welding. Alternatively, the connection plate 334 may be connected to the first current collector 332 by laser welding. Connection between the connection plate 334 and the sub-plate 336 may be performed by laser welding, etc. To prevent damage to the insulation plate 322 during welding, the lower end of the connection plate 334 is disposed at a lower position than the upper end of the electrode assembly 100, and the welding portion may also be formed adjacent to the lower end of the connection plate 334 (disposed closer to the bottom surface of the case).

The sub-plate 336 may be made of a conductive material having a predetermined width and length and may have a substantially plate shape. One end (upper end) of the sub-plate 336 may be welded in contact with the lower portion of the connection plate 334. When, of the plate surfaces of the sub-plate 336, the one surface facing the electrode assembly 100 is defined as the inner side, and the other surface facing the short side portions 230 of the case 200 is defined as the outer side, the first substrate tab 112 may be connected to the inner side. A portion where the sub-plate 336 is connected to the connection plate 334 may be defined as a first connection part 336a, and a portion connected to the first substrate tab 112 may be defined as a second connection part 336b. In the sub-plate 336, the first connection part 336a and the second connection part 336b may be bent at a predetermined angle. As an example, an inner side of the second connection part 336b may be bent toward the electrode assembly 100 from the first connection part 336a and positioned on the same plane as the inner side of the connection plate 334. Alternatively, the inner side of the second connection part 336b may be disposed to be more inward in the electrode assembly 10 than the inner side of the connection plate 334. The inner side of the second connection part 336b may be connected to the first substrate tab 112 by welding. Accordingly, the vertical length of the second connection part 336b may correspond to or be slightly larger than the vertical length of the first substrate tab 112. The width of the second connection part 336b may also correspond to or slightly larger than the widths of the first substrate tabs 112 welded altogether. In addition, a plurality of concave welding grooves 336c may be formed on the outer surface of the second connection part 336b. On the basis of FIG. 2, a plurality of welding grooves 336c may be formed along the width direction of the second connection part 336b. A welding portion between the second connection part 336b and the first substrate tab 112 may be formed on the welding groove 336c. As an example, when the first current collector 332 has a thickness of 3.5 mm, the connection plate 334 and the sub-plate 336 may be formed to have a thickness of 0.8 mm.

As described above, the relatively thick first current collector 332 is formed in a straight line, and the thicknesses of the connection plate 334 and the sub-plate 336 are reduced, a space for increasing the size of the electrode assembly 100 can be secured.

Meanwhile, as shown in FIGS. 2 to 4, heat generation occurs between a welding spot where the connection plate 334 and the sub-plate 336 are welded and a first welding spot where the sub-plate 336 and the first substrate tab 112 (or second substrate tab) are welded. The corresponding portion is an area where resistance is increased due to welding and shape features (bending), and thus is an area where heat generation inevitably occurs generating heat.

In order to prevent damage due to heat generation, a low-resistance material may be plated on the connection plate 334 and the sub-plate 336. Alternatively, the low-resistance material may be plated only on the sub-plate 336. In this embodiment, the term "low-resistance material" means a material having relatively low resistance compared to the material of the first current collector 332 or the second current collector 342 . Therefore, in this embodiment, all materials having lower resistance than copper or aluminum may be applied to the low-resistance material. By plating the low-resistance material, an effect of lowering resistance is exerted, and thus heat generation can be reduced. As an example, the low-resistance material may be silver or gold.

Alternatively, as shown in FIGS. 3 and 4, heat generation preventing parts 336d and 346d may be provided at heating portions (with reference to FIG. 4 and for convenience, the following description will be made on the basis of the heat generation preventing part 336d of the first terminal part, but the heat generation preventing part 346d of the second terminal part also has the same feature).

The heat generation preventing part 336d may be sized and shaped to correspond to an area where heat is generated. Therefore, the heat generation preventing part 336d may be shaped of a thin plate shape bent to correspond to the shape of the bent portion of the sub-plate 336 and the surroundings thereof. As an example, the heat generation preventing part 336d may be formed to cover the heating portions, and may have a width smaller than that of the sub-plate 336 and may be in the form of a thin plate plated with a low-resistance material. To form the heat generation preventing part 336d, a groove to which the heat generation preventing part 336d is fixed may be formed in the sub-plate 336. Alternatively, the heat generation preventing part 336d may be made of a clad metal. The clad metal may be obtained by fusing two or more different types of metals or alloys by a method such as hot pressing. When the heat generation preventing part 336d is a clad metal, after forming the clad metal with the low-resistance material described above, the heat generation preventing part 336d may be formed by a method such as adhesion, fusion, or hot compression.

In this way, by plating a low-resistance material on the heating portion or configuring the heat generation preventing part with a low-resistance material, the resistance of the heating portion can be lowered, thereby reducing heat generation.

As shown in FIGS. 1 to 4, the first terminal part 350 may include a first terminal pin 352 and a first terminal plate 354. The first terminal part 350 may further include a fixing plate 356 for fixing the first terminal pin 352 as necessary.

The first terminal pin 352 has a substantially cylindrical shape and is electrically connected to the first electrode plate 110 of the electrode assembly 100 by being electrically connected to the first current collector 332. A flange 352a on which the first terminal plate 354 is seated is provided adjacent to the upper end of the first terminal pin 352. The flange 352a extends outward from the outer circumferential surface of the first terminal plate 354 in a vertical direction. Upper and lower surfaces of the flange 352a may be substantially parallel to the cap plate 310. A part of the lower surface of the first terminal plate 354 may be in contact with the upper surface of the flange 352a, and the upper surface of the flange 326a of the pin insulation parts 326 may be in contact with the lower surface of the flange 352a. In a state in which the pin insulation parts 326 are inserted into the cap plate 310 during manufacturing, the lower portion of the first terminal pin 352 may sequentially pass through the upper insulation part 328, the cap plate 310, the insulation plate 322 and the first current collector 332 to be inserted therethrough. Thereafter, the first terminal plate 354 may be seated on the upper portion of the flange 352a, and the upper and lower ends of the first terminal pin 352 may be pressed and deformed, thereby fixing the first terminal pin 352 and the first terminal plate 354, the first terminal pin 352, and the first current collector 332. Then, if necessary, the first terminal pin 352 and the first current collector 332 may be fixed by welding a lower part of the first terminal pin 352 and a part of the lower surface of the first current collector 332. Alternatively, the fixing plate 356 may be brought into close contact with the lower end of the first terminal pin 352, and the fixing plate 356, the lower end of the first terminal pin 352, and the first current collector 332 may be welded together. When the fixing plate 356 is applied, a groove into which the fixing plate 356 is inserted may be formed below the first current collector 332.

The first terminal plate 354 is disposed on the top of the first terminal part 350 and electrically connects the secondary battery 10 with the outside by using a conductive material. The first terminal plate 354 has a substantially plate shape and may be disposed parallel to the upper end of the electrode assembly 100. A terminal hole through which the first terminal pin 352 is inserted is formed through the first terminal plate 354. The first terminal plate 354 is seated on the flange 352a of the first terminal pin 352 in a state in which the first terminal pin 352 is inserted into the cap plate 310. Thereafter, the upper end of the first terminal pin 352 is pressed and deformed, thereby fixing the first terminal plate 354 in a state of being coupled to the first terminal pin 352.

By the above-described structure, in the first electrode plate 110 of the electrode assembly 100, a current path may be formed up to the first substrate tab 112, the sub-plate 336, the connection plate 334, the first current collector 332, the first terminal pin 352, and the first terminal plate 354.

As shown in FIGS. 2 to 4, the second current collecting part 340 has the same configuration as the first current collecting part 330, but is disposed symmetrically with the first current collecting part 330 and electrically connected to the second electrode plate 120. A detailed description of the second current collecting part 340 will be omitted.

As shown in FIGS. 2 to 4, the second terminal part 360 may include a second terminal pin 362, a second terminal plate 364, a conductive plate 366 and a fixing plate 356. The second terminal pin 362, the second terminal plate 364, and the fixing plate 356 have the same configuration as the first terminal part 350 and are arranged symmetrically with the first terminal part 350.

The conductive plate 366 is a configuration applied only to the second terminal part 360 and is disposed between the second terminal plate 364 and the cap plate 310. The conductive plate 366 may have a rectangular plate shape substantially corresponding to the shape of the second terminal plate 364. The conductive plate 366 is formed to be larger than the second terminal plate 364 and has a groove in which the second terminal plate 364 is seated. A hole is formed through the conductive plate 366 at a position corresponding to the terminal hole 312 of the cap plate 310. The flange 352a of the second terminal pin 362 is disposed in the through hole. As an example, the conductive plate 366 may be made of a conductive resin material and may be formed by an injection method. The conductive plate 366 electrically connects the second terminal plate 364 electrically connected to the second terminal pin 362 and the cap plate 310. Therefore, the cap plate 310 is connected to the second current collecting part 340 by the second terminal part 360, and thus is electrically connected to the second electrode plate 120. Accordingly, the cap plate 310 has the same polarity of the positive electrode as that of the second current collecting part 340, and the case 200 welded to the cap plate 310 also has the polarity of the positive electrode.

As described above, the second current collecting part 340 is configured in the same manner as the first current collecting part 330. Therefore, the relatively thick second current collector 342 is formed in a straight line, and the connection plate 334 and the sub-plate 336 have small thicknesses, thereby securing a space for increasing the size of the electrode assembly 100.

While the foregoing embodiment has been provided for carrying out the present invention, it should be understood that the embodiment described herein should be considered in a descriptive sense only and not for purposes of limitation, and various changes in form and details may be made therein without departing from the spirit and scope of the invention as defined by the following claims.

### [Explanation of symbols]

| | | | |
|---|---|---|---|
| 10: | Secondary battery | 100: | Electrode assembly |
| 110: | First electrode plate | 112: | first substrate tab |
| 120: | Second electrode plate | 122: | second substrate tab |
| 130: | Separator | 200: | Case |
| 300: | Cap assembly | 310: | Cap plate |
| 320: | Insulation member | 330: | First current collecting part |
| 332: | First current collector | 334: | Connection plate |
| 336: | Sub-plate | 336d: | Heat generation preventing part |
| 340: | Second current collecting part | | |
| 350: | First terminal part | | |
| 360: | Second terminal part | | |

## Claims

1. A secondary battery comprising:
a case that has one side open to form an opening;
an electrode assembly that includes a first electrode plate accommodated in the case and having a first electrode substrate tab disposed on one side of the case in the longitudinal direction, a second electrode plate having a second electrode substrate tab disposed on the other side in the longitudinal direction of the case, and a separator interposed between the first electrode plate and the second electrode plate, and is wound or stacked; and
a cap assembly including a cap plate coupled to the opening of the case, a first current collecting part and a second current collecting part respectively including a first current collector and a second current collector disposed in parallel with the upper end of the lengthwise direction of the electrode assembly and respectively electrically connected to the first electrode substrate tab and the second electrode substrate tab, a first terminal part and a second terminal part respectively electrically connected to the first current collecting part and the second current collecting part, and a plurality of insulation members coupled to at least one of the cap plate, the first current collector and the second current collector, and the first terminal part and the second terminal part,
wherein the first current collecting part further comprises a sub-plate that electrically connects the first current collector and the first substrate tab, the second current collecting part further comprises a sub-plate that electrically connects the second current collector and the second substrate tab, and at least one of the sub-plates of the first current collecting part and the second current collecting part is partially or wholly made of a material having lower resistance than the first current collector or the second current collector.

2. The secondary battery as claimed in claim 1, wherein: the first current collecting part further comprises a connection plate electrically connected to the first current collector and having one end bent in a direction of the first substrate tab, and the sub-plate is electrically connected to the connection plate and the first substrate tab; and
the second current collecting part further comprises a connection plate electrically connected to the second current collector and having one end bent in a direction of the second substrate tab, and the sub-plate is electrically connected to the connection plate and the second substrate tab.

3. The secondary battery as claimed in claim 2, wherein the sub-plate of the first current collecting part comprises a first connection part electrically connected to the connection plate and a second connection part electrically connected to the first substrate tab, and the sub-plate of the second current collecting part comprises a first connection part electrically connected to the connection plate and a second connection part electrically connected to the second substrate tab.

4. The secondary battery as claimed in claim 3, wherein one end of the connection plate and the first connection part of the sub-plate is welded to each other, the second connection part and the first substrate tab of the first current collecting part is welded to each other, and the second connection part and the second substrate tab of the second current collecting part is welded to each other..

5. The secondary battery as claimed in claim 4, wherein a heat generation preventing part is provided between a welding spot of the first connection part and a first welding spot of the second connection part adjacent to the first connection part.

6. The secondary battery as claimed in claim 5, wherein the heat generation preventing part is a material having lower resistance than the first current collector or the second current collector or is a clad metal.

7. The secondary battery as claimed in claim 3, wherein a welded portion of the connection plate and the sub-plate is disposed closer to the bottom surface of the case than to the top of the electrode assembly.

8. The secondary battery as claimed in claim 3, wherein in the sub-plate, the second connection part is bent toward the electrode assembly from the first connection part, and the bent portion is disposed closer to the bottom surface of the case than the upper end of the electrode assembly.

9. The secondary battery as claimed in claim 8, wherein in the second connection part, a plate surface facing the electrode assembly is disposed on the same plane as a plate surface of the connection plate facing the electrode assembly.

10. The secondary battery as claimed in claim 8, wherein in the second connection part, a plate surface facing the electrode assembly is disposed closer to the electrode assembly than a plate surface of the connection plate facing the electrode assembly.

11. The secondary battery as claimed in claim 9 or 10, wherein the second connection part has a welding groove concavely formed on the plate surface facing the case.

12. The secondary battery as claimed in claim 2, wherein a thickness of the first current collector or the second current collector is greater than that of the connection plate and the sub-plate.

13. The secondary battery as claimed in claim 12, wherein the thickness of the first current collector or the second current collector is 4 to 5 times the thickness of the connection plate and the sub-plate.

14. A secondary battery comprising:
an electrode assembly;
a case accommodating the electrode assembly; and
a cap assembly coupled to the case and including a first current collector and a second current collector electrically connected to the electrode assembly and disposed parallel to the upper end of the electrode assembly,
wherein the cap assembly further comprises a pair of sub-plates electrically connecting the first current collector and the second current collector to the electrode assembly, respectively, and at least one of the sub-plates is made of a material having lower resistance than the first current collector or the second current collector.

15. The secondary battery as claimed in claim 14, wherein the cap assembly comprises:
a cap plate coupled to the case;
a first current collecting part having the sub-plate electrically connected to a first substrate tab provided on the first electrode plate of the electrode assembly, and a connection plate electrically connected to the first current collector and the sub-plate;
a second current collecting part having the sub-plate electrically connected to a second substrate tab provided on the second electrode plate of the electrode assembly, and a connection plate electrically connected to the second current collector and the sub-plate;
a first terminal part having a first terminal pin coupled to and electrically connected to the first current collector and a first terminal plate coupled to and electrically connected to the first terminal pin;
a second terminal part having a second terminal pin coupled to and electrically connected to the second current collector, a second terminal plate coupled to and electrically connected to the second terminal pin, and a conductive plate; and
an insulation member made of an insulating material provided between the cap plate and the first current collector, between the first current collector and the electrode assembly, between the second current collector and the electrode assembly, between the first terminal pin and the second terminal pin and the cap plate.

16. The secondary battery as claimed in claim 15, wherein the connection plate has one end disposed parallel to the first current collector or the second current collector and the other end bent toward the electrode assembly, and the sub-plate is welded to the bent end.

17. The secondary battery as claimed in claim 16, wherein the sub-plate comprises a first connection part welded to the connection plate, and a second connection part bent toward the electrode assembly from the first connection part and electrically connected to the electrode assembly.

18. The secondary battery as claimed in claim 17, wherein a heat generation preventing part is provided between a welding spot of the first connection part and a first welding spot of the second connection part adjacent to the first connection part.

19. The secondary battery as claimed in claim 18, wherein the heat generation preventing part is plated with a material having lower resistance than the first current collector or the second current collector or is a clad metal.
